# EUROPEAN PATENT SPECIFICATION

(11) **EP 4 408 634 B1**
(45) Date of publication and mention of the grant of the patent: **05.11.2025**
(21) Application number: 23812890.4
(22) Date of filing: 22.11.2023
(51) Int. Cl.: B29C 53/58, B29C 53/60, B29D 23/00, H01B 12/06

(54) **A REINFORCED THERMOPLASTIC CRYOSTAT FOR A HIGH TEMPERATURE SUPERCONDUCTOR**
VERSTÄRKTER THERMOPLASTISCHER KRYOSTAT FÜR HOCHTEMPERATURSUPRALEITER
CRYOSTAT THERMOPLASTIQUE RENFORCE POUR SUPRACONDUCTEUR A HAUTE TEMPERATURE

(30) Priority: 22.12.2022 EP 22215766
(43) Date of publication of application: 07.08.2024
(73) Proprietor: Supernode Limited, Dublin D22HC81 (IE)
(72) Inventor: ACIN, Marcos, Dublin (IE); FRULLONI, Emiliano, Dublin (IE)
(74) Representative: FRKelly
(86) International application number: PCT/EP2023/082647
(87) International publication number: WO 2024/132344

(56) References cited:
- GB-A- 2 350 474
- US-A- 3 431 347
- US-A1- 2005 236 175
- US-A1- 2010 227 764

## Description

### Field of the invention

The present invention is concerned with a thermoplastic cryostat for a high temperature superconductor (HTS), and in particular a cryostat used in a superconducting cable system and which is reinforced in a manner to provide desired characteristics including mechanical properties and the requisite thermo-hydraulic performance while facilitating a continuous manufacturing process in order to allow an overall reduction in cost.

### Background of the invention

The current state of the art in the design of high temperature superconductor (HTS) power cables includes the use of metallic alloy cryostats, typically of corrugated tubing, adopted from adjacent industrial uses such as LNG transfer solutions, to host HTS power cables and transmit pressurised cryogenic fluid to cool the HTS materials.

The metallic alloys are not efficient thermally and are not electrical insulators. This introduces challenges in the design and reliability of the cryostat system and HTS power cable. The conventional cross section of a HTS power cable system includes an inner corrugated tube arranged concentrically within the outer corrugated tube. The metallic alloy cryostats are designed to mechanically resist external mechanical loading and support a HTS power cable and cryogenic fluid within the inner corrugated tube. The corrugated profile tubing caters for the deficiencies in performance of metallic alloys including the Coefficient of Thermal Expansion (CTE) which results in the metallic alloy contracting both longitudinally and radially in dimension. These corrugations in the inner corrugated tube result in significant pressure losses in the flow of cryogenic fluid, resulting in shorter longitudinal lengths of HTS power cable systems before re-pressurisation of the cryogenic fluid is needed.

Due to the metallic alloy characteristics, the HTS power cable must include independent dielectric insulation, typically of polypropylene laminated paper (PPLP) with LN2, or equivalent, with a layer thickness proportional to the PPLP and LN2 dielectric strength and HTS power cable voltage. The dielectric may alternatively be added to the exterior of the corrugated cryostats, using conventional insulation such as XLPE. The need for the HTS power cable to have independent dielectric insulation layers results in the HTS power cable having a larger outer diameter, thus inferring that in many embodiments the inner corrugated tube must have a larger diameter to host the HTS power cable and sufficient cryogenic fluid to achieve a target mass flow rate to cool the HTS material.

There are currently no long-distance HTS power cables in operation. The longest is currently a project in development at 12km which will use the conventional HTS power cable configuration described using corrugated steel cryostat.

For short HTS power cable runs, extruded aluminium tubes or stainless-steel IC smooth-bore tubes can be used, or lined corrugated cryostats. Smooth-bore stainless steel cryostats are the most common technology for terrestrial particle accelerators or LNG transfer pipes. These are typically installed with rolling or expansion devices to accommodate thermal contraction. Typical metallic alloys like stainless steel and aluminium suffer from larger Coefficient of Thermal Expansion/Contraction values resulting in requirements for multiple bellows-based expansion joints to offset the longitudinal contraction of the metallic tubes when filled with cryogenic fluid. These joints introduce failure points and thermal leak paths in the system thus undermining reliability.

Furthermore, metallic alloys and carbon fibre composites are electrical and thermal conductors and as a result insulation layers are needed which increase the overall dimensions of the cryostat. Thermo-hydraulic performance and manufacturing and/or operating costs are worsened consequently.

Smooth-bore metallic cryostats cannot be continuously manufactured, they need to be welded in straight sections of around 12m in length and cannot be reeled into a coil for transport. This increases the cost of manufacturing, transportation and deployment of such systems. Similarly a carbon fibre thermoset cryostat cannot be reeled due to its high stiffness.

Corrugated metallic cryostats generate additional turbulence and friction with the liquid cryogenic fluids thus additional heat generation and higher-pressure losses accumulate over shorter distances thus requiring additional pressurisation points on the HTS power cable system. Long distance SCS with corrugated IC are therefore technically unfeasible.

Carbon fibre thermoset composites are known in the literature to develop cracks within the material when subjected to cryogenic environments. These cracks represent a permeability leak for the cryogenic liquid into the vacuum chamber potentially disrupting the SCS operation.

GB2350474A discloses a superconducting power cable which utilises a polymer liner or cooling tube in order to provide flexibility. The cooling tube may be wrapped in polymer tapes in order to increase the strength and pressure resistance of the tube. A crimped or convoluted wall may be employed in order to provide a "bellows" profile in order to address the issues of temperature induced strain when operating at cryogenic temperatures.

US2010227764A1 discloses a cryostat in the application of superconductive multi-phase, fluid-cooled cable systems.

All alternative solutions are currently economically and technically unfeasible for long distance SCS deployment (i.e. 100km lengths)

The primary design issues and inefficiencies with state-of-the-art HTS power cable systems therefore include:
- Limited or single function layers within the cable system, for example, separate dielectric insulation on the conductor, and metallic cryostats to enclose a vacuum and cryogenic fluid;
- Corrugated metallic cryostats resulting in heat ingress, additional turbulence generation in liquid cryogenic fluids thus additional heat generation, higher pressure losses accumulated over shorter distances thus needing more pressurisation points on the HTS power cable system, and high friction factor heat generation resulting in the cryogenic fluid;
- Larger diameter cryostats required to host multi-layered HTS conductors resulting in greater radiative heat ingress.
- High rates of thermal contraction and expansion with changes in temperature.
- Complex manufacturability and associated costs.
- Non-corrugated steel cryostats suffer from reliability and associated mobilisation and installation complexity.
- Lack of optimisation for long distance superconductor power cables

It is therefore an object of the present invention to overcome the above mentioned problems of the prior art.

### Summary of the invention

According to a first aspect of the present invention there is provided a reinforced thermoplastic cryostat for a high temperature superconductor comprising a thermoplastic conduit and a plurality of reinforced thermoplastic tapes wound around an exterior surface of the thermoplastic conduit in a helical orientation to the axial direction and bonded to the exterior surface of the thermoplastic conduit, the combined thermoplastic tapes and cryostat having an axial coefficient of thermal expansion of between +/- 15e-6/°C.

Preferably the thermoplastic tapes extend at a helix angle of between 20° and 50°, more preferably less than 45°, and most preferably between 25° and 40° to the axial direction.

Preferably, two or more of the thermoplastic tapes extend at different helix angles.

Preferably, two or more of the thermoplastic tapes extend in opposition directions around the exterior surface of the thermoplastic conduit.

Preferably, the thermoplastic tapes are arranged in layers.

Preferably, the thermoplastic tapes of adjacent layers extend in opposition directions around the exterior surface of the thermoplastic conduit.

Preferably, the thermoplastic tapes comprise fibre reinforcement.

Preferably, the thermoplastic tapes comprise a substrate on which the reinforcing fibres are retained.

Preferably, the fibres comprise a negative coefficient of thermal expansion.

Preferably, the thermoplastic conduit comprises a polymer selected from PEEK, PA, PEI, TPI, HDPE, PP, PVDF, PPS and/or ABS.

Preferably, the thermoplastic tapes comprise a polymer selected from PEEK, PA, PEI, TPI, HDPE, PP, PVDF, PPS and/or ABS.

Preferably, the thermoplastic conduit and the thermoplastic tapes are comprised of the same material.

Preferably, the reinforcing fibres of the thermoplastic tapes comprise carbon, glass, aramid, and/or basalt.

Preferably, the thermoplastic tapes comprises unidirectional fibre reinforced prepreg.

Preferably, the total radial thickness of the reinforcing tapes is greater than or equal to the radial thickness of the thermoplastic conduit.

Preferably, comprising between 4 and 30 layers of the reinforced thermoplastic tape, more preferably between 6 and 20 layers.

Preferably, the thermoplastic conduit comprises a smooth bore.

Preferably, the cryostat comprises at least one impermeable barrier layer.

Preferably, at least one barrier layer surrounds the thermoplastic tapes.

Preferably, the barrier layer comprises aluminium, steel, EVOH, PET, LCP, PVDC and/or PVOH.

Preferably, the cryostat comprises a minimum bending radius of at least 0.5m.

According to a second aspect of the present invention there is provided a superconductor cable system comprising a reinforced thermoplastic cryostat according to the first aspect of the invention; a superconductor extending longitudinally of the cryostat; and a supply of cryogen contained within the cryostat in thermal communication with the superconductor.

According to a third aspect of the present invention there is provided a method of manufacturing a reinforced thermoplastic cryostat comprising the steps of extruding a thermoplastic conduit and winding a plurality of reinforced thermoplastic tapes around an exterior surface of the thermoplastic conduit in a helical orientation at a helix angle to the axial direction and bonding the thermoplastic tapes to the thermoplastic conduit such as to provide the cryostat with an axial coefficient of thermal expansion of between +/- 15e-6/°C.

Preferably, the method comprises winding the thermoplastic tapes at a helix angle of between 20° and 50°, more preferably less than 45° , and most preferably between 25° and 40° to the axial direction.

Preferably, the method comprises continuously manufacturing the reinforced thermoplastic cryostat.

Preferably, the method comprises winding two or more of the thermoplastic tapes at different helix angles.

Preferably, the method comprises winding the thermoplastic tapes around the conduit in a continuous process.

Preferably, the method comprises the step of bonding the thermoplastic tapes to the exterior surface of the thermoplastic conduit.

Preferably, the method comprises applying heat and/or pressure to the thermoplastic tapes to effect bonding to the exterior surface of the conduit.

Preferably, the method comprises applying a fluid impermeable barrier layer to the cryostat.

Preferably, the method comprises applying the barrier layer over and enclosing the thermoplastic tapes.

Preferably, the method comprises winding between 4 and 30 layers of the reinforced thermoplastic tapes around the exterior surface of the thermoplastic conduit, more preferably between 6 and 20 layers.

### Brief description of the drawings

The present invention will now be described with reference to the accompanying drawings, in which:
Figure 1 illustrates a reinforced thermoplastic cryostat according to an aspect of the present invention;
Figure 2 illustrates a perspective view of an embodiment of a superconducting cable system according to an aspect of the invention and comprising the reinforced thermoplastic cryostat shown in Figure 1;
Figure 3 illustrates a perspective view of a second embodiment of a superconducting cable system according to an aspect of the present invention;
Figure 4 illustrates a perspective view of a third embodiment of a superconducting cable system;
Figure 5 illustrates a perspective view of a fourth embodiment of a superconducting cable system according to the invention;
Figure 6 illustrates a perspective view of a superconducting cable system according to a fifth embodiment of the invention;
Figure 7 illustrates a perspective view of a superconducting cable system according to a sixth embodiment of the invention;
Figure 8 illustrates a perspective view of a superconducting cable system according to a seventh embodiment of the invention;
Figure 9 illustrates a graph showing the trade-off between the coefficient of thermal expansion (CTE), minimum bending radius (MBR) and burst pressure for a cryostat according to the present invention comprising a PEEK liner wrapped with carbon fibre reinforced PEEK tapes wound at different angles;
Figure 10 illustrates a graph showing the trade-off between the CTE, MBR and burst pressure for a cryostat according to the present invention comprising a PEI liner wrapped with carbon fibre reinforced PEI tapes wound at different angles;
Figure 11 illustrates a graph showing the trade-off between the CTE, MBR and burst pressure for a cryostat according to the present invention comprising a PEI liner wrapped with glass fibre reinforced PEI tapes wound at different angles;
Figure 12 illustrates a graph showing the trade-off between the CTE, MBR and burst pressure for a cryostat according to the present invention comprising a PA12 liner wrapped with carbon fibre reinforced PA12 tapes wound at different angles; and
Figure 13 illustrates a graph showing the trade-off between the CTE, MBR and burst pressure for a cryostat according to the present invention comprising a PP liner wrapped with carbon fibre reinforced PP tapes wound at different angles;

### Detailed description of the drawings

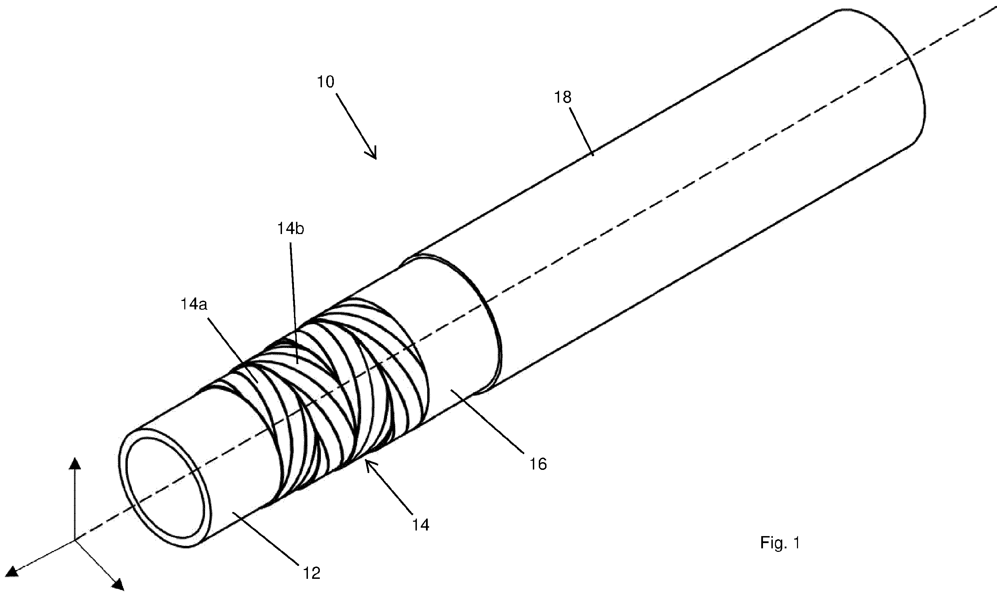

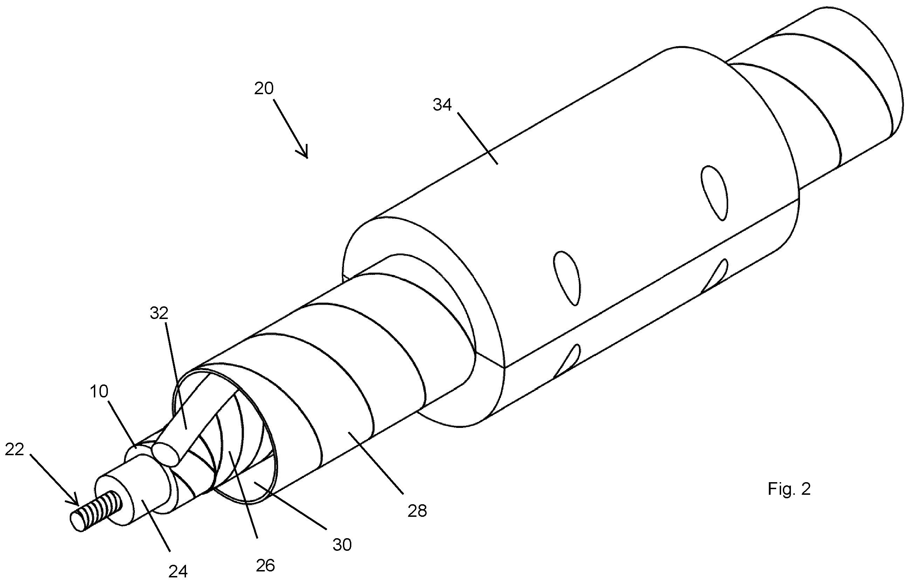

Referring now to Figure 1 of the accompanying drawings there is illustrated a perspective view of a reinforced thermoplastic tubular cryostat, generally indicated as 10, for particular use in various embodiments of superconducting cable systems as illustrated in Figures 2 to 8 and which each utilise the reinforced thermoplastic cryostat 10 in order to achieve improved performance and/or cost efficiencies.

The primary function of the cryostat 10 when used in superconducting cable applications is to contain a cryogen and to facilitate thermal communication between a superconductor and the cryogen. The cryostat 10 must also provide structural integrity against the pressurised cryogen, be a dielectric insulator, and act as a thermal insulator to minimise heat ingress from the exterior and act as a permeability barrier. In addition, to facilitate design and transportation while minimising the cost of the superconducting cable systems, the cryostat 10 must have a low preferably near zero, axial coefficient of thermal expansion (CTE) to avoid or reduce the use of conventional bellows based expansion joints, be capable of being spooled into reels, and be capable of being manufactured in long lengths, for example 100m or longer, preferably 1km or longer, or more preferably 10km or longer.

The cryostat 10 thus comprises an inner tubular conduit or liner 12 formed from a thermoplastic material, for example but not limited to PEEK, PA, PEI, TPI, HDPE, PP, PVDF, PPS and ABS, but it will of course be understood that other thermoplastics or blends thereof may be employed. The use of a thermoplastic allows relatively low cost manufacture, for example via continuous extrusion of the conduit or liner 12, while providing sufficient flexibility to allow for spooling. The thermoplastic of the liner 12 may be reinforced with additives or fillers in order to provide desired performance and/or mechanical characteristics to meet the above or other performance requirements.

Wrapped around the exterior surface of the liner 12 are a plurality of reinforcing bands or tapes 14 which extend in a helical orientation around the liner 12. This helical orientation provides a reinforcing function while maintaining a desired overall flexibility and permeability as hereinafter described in detail. The angle at which the tapes 14 extend relative to the longitudinal axis of the liner 12, hereinafter referred to as the "helix angle", can be varied to provide different reinforcing levels or effects. In a preferred arrangement at least two tapes 14a and 14b extend in opposition directions around the liner 12, or in other words at positive and negative helix angles relative to one another. The helix angle at which the tapes 14 extend has a significant impact on the reinforcing performance and is further discussed in detail hereinafter. The tapes 14 may also be arranged in particular layups, for example having a first layer in which one or more tapes 14a extend in a first helical direction to partially or fully enclose the liner 12, followed by a second layer of one or more tapes 14b extending in a second and opposite helical direction to partially or fully enclose the first layer. Where multiple layers of tapes 14 are provided it is preferably that the helix angle of adjacent layers alternatives between a positive and negative angle, for example from +40° in one layer to -40° in the next layer, then back to +40° and so on for each subsequent layer. A permeability barrier layer 16 is preferably provided around the outermost layer of tapes 14 to enclose the laminate of liner 12 and tapes 14, and may for example comprise aluminium or the like, although it will be appreciated that any suitable material or combination thereof may be employed. Examples of another metallic material is steel while suitable polymers include ethylene vinyl alcohol (EVOH), polyethylene terephthalate (PET), liquid crystal polymer (LCP), polyvinylidene chloride (PVDC), and polyvinyl alcohol (PVOH). A further outer jacket 18 may be provided about the barrier layer 16. The barrier layer 16 may also be provided between layers of the tapes 14, around the interior wall of the liner 12, or multiple barrier layers 16 may be provided, both internally and externally of the liner 12.

The tapes 14 are preferably formed from a substrate on which reinforcing fibres are integrated or otherwise captured or retained. The substrate is preferably formed from a thermoplastic, and most preferably the same thermoplastic material as the liner 12, for example polyether ether ketone (PEEK), polyamide (PA), polyethylenimine (PEI), thermoplastic polyimide (TPI), high density polyethylene (HDPE), polypropylene (PP), polyvinylidene fluoride (PVDF), Polyphenylene sulfide (PPS) and acrylonitrile butadiene styrene (ABS) in order to facilitate the in-situ consolidation between the tapes 14 and liner 12 during the manufacturing of the cryostat 10. This may be achieved by any suitable means, for example the application of heat and/or pressure to bond the tapes 14 to the liner 12. The reinforcing fibres may for example comprise carbon, glass, aramid, and/or basalt. As detailed hereinafter, the tapes 14 may be wound in a continuous manner around the liner 12 with the subsequent application of heat and/or pressure in order to bond the tapes 14 to the liner 12.

The layup arrangement of the tapes 14 and the particular helix angles can be utilised to create a fully consolidated cryostat 10 that has an axial CTE that is close to or equal to zero, which is significantly lower than the CTE of the thermoplastic liner 12 in isolation. A CTE of close to zero is herein defined as being in the range of +/- 15e-6/°C, more preferably between +/- 5e-6/°C, but most preferably 0/°C, at cryogenic operating temperature, for example between -196.3°C and -206.3°C although it will of course be understood that other cryogenic temperatures may be required to suit particular applications. The provision of the reinforcing tapes 14 does not compromise spooling of the cryostat 10, which is strong enough to sustain typical operating and deployment loads required in a superconducting cable application. As detailed above the layup arrangement of the tapes 14 is such that the helix angle may be varied after each layer from positive to negative, creating a balanced symmetric bi-axial angle laminate surrounding the liner 12. For the typical thermoplastics mentioned above, an optimised bi-axial angle has been found theoretically and experimentally to be between approximately 20°-50°, preferably less than 45°, and more preferably between 25° and 40°, depending on the material used, which enables the cryostat 10 to be produced having an axial CTE close to zero whilst the flexural modulus has not increased substantially, allowing for spooling. Spooling at these helix angles will be dominated by the strain at break of the thermoplastic substrate of the tapes 14 rather than the reinforcing fibres. Helix angles higher than 50°, for example 55° typically used for maximum optimised pressure containment pipes, will not result in a close to zero axial CTE as the thermoplastic will start to dominate the laminate. Whilst lower angles, for example 0°, can have a CTE close to zero this results in a very stiff cryostat 10 and the spooling will be dominated by the fibre strain at break, significantly reducing or preventing spooling of the cryostat 10. The optimised angle for minimum axial CTE, spoolable stiffness and strain at break and as a lesser consideration, strength for operating and deployment loads has been found to be between approximately 20°-50°, preferably less than 45°, and more preferably between 25° and 40°, (positive or negative angle) in the specific balanced layup arrangement described. This arrangement is optimal for long distance HTS systems. This configuration allows the cryostat 10 to achieve a minimum bending radius of at least 0.5m when spooled into a reel.

It has been found that provided the total radial thickness of the layers of tapes 14 is equivalent or greater than the thickness of the thermoplastic liner 12, this axial CTE minimisation effect will occur where a minimum axial CTE of the cryostat 10 can be found between 20° to 50°, more preferably between 25° and 40°, for multiple types of thermoplastic materials and reinforcement tapes 14. When the thickness of the liner 12 is substantially thicker than the total thickness of the reinforced tapes 14, the liner 12 will dominate and an axial CTE for the cryostat 10 of close to zero cannot be achieved. Using negative CTE fibres in the reinforcement tape 14 such as carbon fibre or aramid fibre will promote this effect even further whereby a negative axial CTE may be achieved. A zero CTE can also be achieved by optimising the helix angle to a non-minimum. A negative CTE may potentially be useful as the thermal loads induced by the expansion upon cryogenic exposure (compression loads) could counteract the effects of the deployment loads (typically pre-tensioned to avoid buckling during deployment and installation subsea). Positive CTE fibres in the tapes 14 such as glass fibres or basalt have also been shown to be capable of creating a zero CTE cryostat 10, despite neither of the constituents have a negative or close to zero CTE.

This phenomenon can be explained by the difference in thermal expansion and stiffness of the reinforcing fibres and the thermoplastic substrate of the tapes 14, and the layup arrangement of layers of alternating helix angles. When the temperature changes, the thermoplastic cannot expand/contract in the longitudinal fibre direction of each layer of tape 14 given the high stiffness and relatively low CTE of the reinforcing fibres constraining it compared to the thermoplastic substrate, and the thermoplastic is therefore forced to move sideways which in turn creates a scissoring effect between the oppositely oriented or angled layers of tape 14, which counteracts the movement of the laminate of tapes 14 and liner 12 in the axial direction creating a laminate where CTE can be even lower than the fibre reinforcement CTE.

The total number of reinforcement layers of tape 14 will be dictated as a minimum by the thickness of the liner 12 so that the zero CTE effect occurs or by the operating and deployment loads. Once the thickness of the liner 12 has been surpassed, the flexural modulus and axial CTE of the cryostat 10 remain relatively constant dominated by the scissoring effect described above. As a result additional reinforcement layers of tape 14 can be added in the specific angle to manage higher operating or deployment loads as needed, without compromising spoolability or CTE. Adding additional layers of tape 14 will typically increase the burst strength of the cryostat 10, allowing higher cryogenic fluid pressures to be contained, and it will also typically increase the tensile capacity of the cryostat 10 against deployment and installation loads such as offshore cable laying operations. Additional layers of tape 14 at different helix angles could be added as long as the laminate of liner 12 and tapes 14 is still dominated in the radial direction by the bi-axial arrangement hereinbefore described. Such additional layers of tape 14 in different orientations may also be beneficial if additional load rating or capabilities are desired, although the preference is to continue the bi-axial laminate to avoid micro-cracking and create a symmetric and balanced laminate.

The addition of the reinforcement tapes 14 also improves the permeability performance of the liner 12 as the reinforcing fibres can be considered impermeable compared to the thermoplastic substrate of the tape 14. However, care needs to be taken to avoid micro-cracking in the laminate when subjected to cryogenics as this can create leak paths. The bi-axial arrangement layup discussed above has been found to minimise cryogenic microcracking as compared to other layups like cross-ply. Should the laminate develop microcracks, the liner 12 will continue to act as a permeating barrier as the microcracks will not extend beyond the reinforcement tapes 14, so a leak path will not be created and vacuum will not be compromised. Additional aluminium film layers beyond the barrier 16 may be added to improve the permeating performance of the fully reinforced cryostat 10. The aluminium film layers can be wrapped and then adhesively bonded with the cryostat 10. This will create a vacuum-tight low permeation barrier that will improve the performance of the cryostat 10.

Without the provision of the reinforcing tapes 14, a thermoplastic cryostat in isolation would typically have low to medium strength, low stiffness, a very high CTE, medium to high permeability, but would not be rated for use at cryogenic temperatures/pressure. Thermoplastics contract or expand significantly more than metals when subjected to a temperature change, and in the case of a cryostat when a cryogenic fluid starts running through it. Relative changes in length for thermoplastic materials subjected to a change in temperature from room temperature to 77K, as measured in a dilatometer compliant with ASTM E228-17, are PEEK -0.8%, HDPE: -2.13%, ABS -1.5%, -1.23%, PA12 -1.64%, PEI -0.85%). In comparison, HTS systems utilising corrugated stainless-steel cryostats undergo a relative change in length of circa -0.29%. Thermoplastic materials on their own would need to use active thermal expansion management systems, for example bellows or roller based systems, to accommodate for such high degree of contraction which would render the system uneconomical and technically very challenging for a long HTS cable system.

Thermoplastic pipe materials could be filled with polymer blends or fibre reinforcement to reduce their CTE. Fillers like Zirconium Tungstate, Carbon fibre, Glass Fibre, Aramid fibre, Basalt fibres can reduce the CTE of a thermoplastic compound. However, changing the CTE of the compound will also affect the manufacturing and other performance characteristics such as stiffness and strength. Typically for thermoplastics, high volume fractions of fillers would be required to achieve CTEs close to stainless steel or aluminium, even then not close to a zero CTE. The addition of such a quantity of fillers will typically increase the stiffness of the pipe/cryostat and reduce the strain at break in such a way that is no longer spoolable. For example, circa 20-30 % Volume fraction of carbon fibre reinforcement into PEEK would reduce the CTE to levels close to stainless steel but would increase stiffness to unworkable levels and reduce the strain at break of the pipe/cryostat where spoolability is no longer possible. In addition, adding high volumes of reinforcement to thermoplastic materials can compromise their cryogenic structural performance through micro-cracking development when in contact with cryogenic fluids. Achieving zero CTE in the axial direction of a thermoplastic cryostat through only filler/blend reinforcement is therefore not technically feasible for long cable HTS systems as it could not be spooled, and it would therefore not be possible to be transported in long lengths. It would also compromise the cryogenic integrity of the cryostat. The laminate structure of the cryostat 10 of the invention, including the thermoplastic liner 12 and surrounding helically extending reinforcing tapes 14, overcomes the above issues, allowing the use of a thermoplastic in applications such as superconducting cable assemblies as detailed in the following examples.

As detailed above, there are a large number of thermoplastics or composites thereof that can be used for the liner 12 and the thermoplastic tapes 14. In addition there are a number of different fibres that can be used to reinforce the tapes 14, different fibre fractions, and the tapes 14 may be laid or wrapped around the liner 12 in a large number of different configurations, angles, number of layers, etc., while the dimensions of the liner 12 and tapes 14 may also vary. Additionally there can be variations in material characteristics of the component parts of the cryostat 10 such as the Young's Modulus, strength and strain at yield, max strength, CTE, all of which will also vary between room temperature and cryogenic operating temperatures, for example -196°C. All of these characteristics and variables will have an effect on the combined axial CTE of the cryostat 10. It has been found that in particular the layup or angle of the tapes 14 has a significant impact on the overall axial CTE of the cryostat 10, and by accurate design can be selected to achieve the desired axial CTE of between +/- 15e-6/°C, more preferably between +/- 5e-6/°C, and most preferably zero irrespective of the combination of the above materials and characteristics.

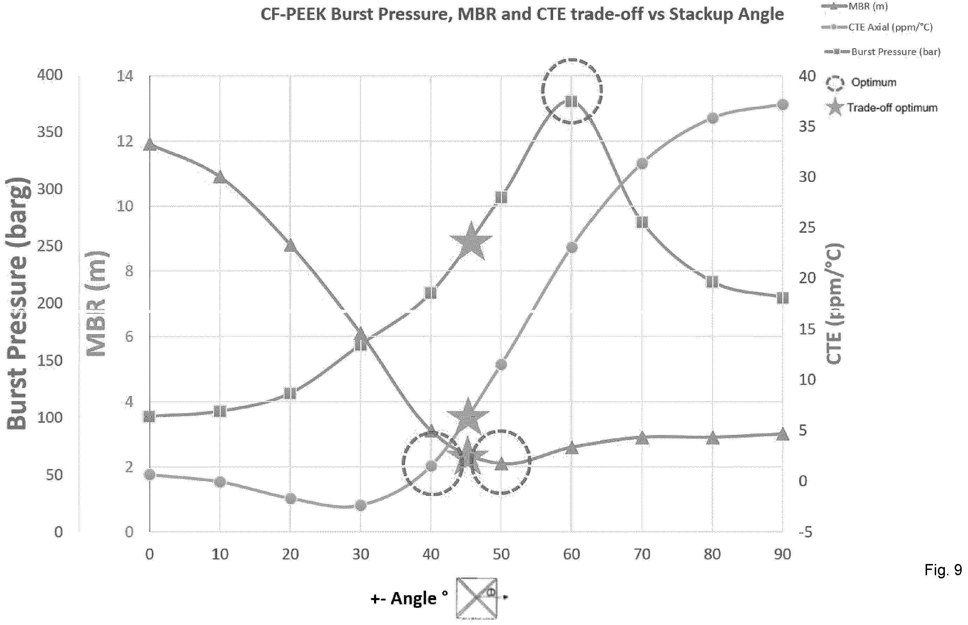

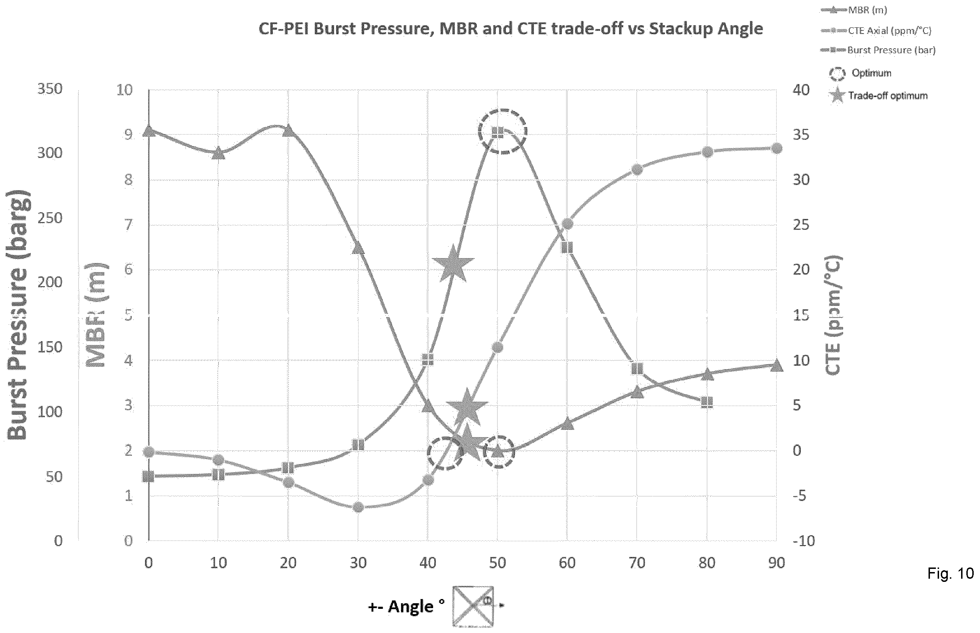

Thus referring to Figures 9 to 13 there is shown a number of graphs illustrating the trade-off between the coefficient of thermal expansion (CTE), minimum bending radius (MBR) and burst pressure for a cryostat 10 according to the invention for a given combination of materials for the liner 12, tapes 14 and reinforcing fibres. Each graph shows multiple variants of the cryostat 10 in which the tapes 14 have been wound at different angles in order to illustrate the impact the layup of the tapes 14 has on the various desired operating characteristics. It can be seen that in order to achieve the minimum axial CTE the winding angle of the tapes 14 should generally be lower than the winding angle which provides the greatest burst strength, which would conventionally be the primary design characteristic. For example in Figure 9 the highest burst pressure is achieved with a tape winding angle of 60 degrees whereas the optimum CTE is achieved with a winding angle of 30 degrees. A winding angle of between 40 degrees and 50 degrees provides an acceptable balance of CTE and MBR. Similar characteristics can be seen for the different material selections graphed in Figures 10 to 13.

The cryostat 10 whose performance characteristics are graphed in Figure 9 comprises a liner 12 of PEEK with tapes 14 comprising PEEK reinforced with carbon fibres, with the tapes 14 wound at angles of between 0 degrees and 90 degrees to the longitudinal axis. The polymer liner 12 is PEEK. The liner 12 has a Young's Modulus at room temperature (RT) of 4GPa and at -196°C of 5.5 GPa. The strength and strains at yield is 51.13 MPa at 1.61%, the max stress is 82.5MPa at 4.14% at RT. The strength and strains at yield are 96.1 MPa at 1.92% and max stress is 168 MPa at 3.5% at - 196°C. The CTE from 25°C to -196°C = 35 ppm/°C. The liner 12 dimensions are an inner diameter of 47.4mm and wall thickness 1.7mm.

The reinforcing fibre material is high strength and high strain carbon fibre, for example Hexcel AS4A carbon fibres having a Young's Modulus of 231 GPa , a strength of 4431 MPa and strain at break 1.7% at room temperature. The CTE from 25°C to -196°C = -1 ppm/°C. The reinforced tape 14 has a fibre volume fraction of 55-59% and is 2mm thick. The tapes 14 are wound with a total of 6 layers.

The cryostat 10 whose performance characteristics are graphed in Figure 10 comprises a liner 12 of PEI with tapes 14 comprising PEI reinforced with carbon fibres, with the tapes 14 wound at angles of between 0 degrees and 90 degrees to the longitudinal axis. The polymer liner 12 is PEI. The liner 12 has a Young's Modulus at room temperature (RT) of 3.1GPa and at -196°C of 4.8 GPa. The strength and strains at yield is 52.7 MPa at 1.9%, the max stress is 98MPa at 5.98% at RT. The strength and strains at yield are 85 MPa at 2.1% and max stress is 155 MPa at 4% at -196°C. The CTE from 25°C to -196°C = 38 ppm/°C. The liner 12 dimensions are an inner diameter of 44.5mm and wall thickness 0.65mm.

The reinforcing fibre material is high strength and high strain carbon fibre, for example Hexcel AS4A carbon fibres having a Young's Modulus of 231 GPa , a strength of 4431 MPa and strain at break 1.7% at room temperature. The CTE from 25°C to -196°C = -1 ppm/°C. The reinforced tape 14 has a fibre volume fraction of 55-59% and is 0.13mm thick. The tapes 14 are wound with a total of 12 layers.

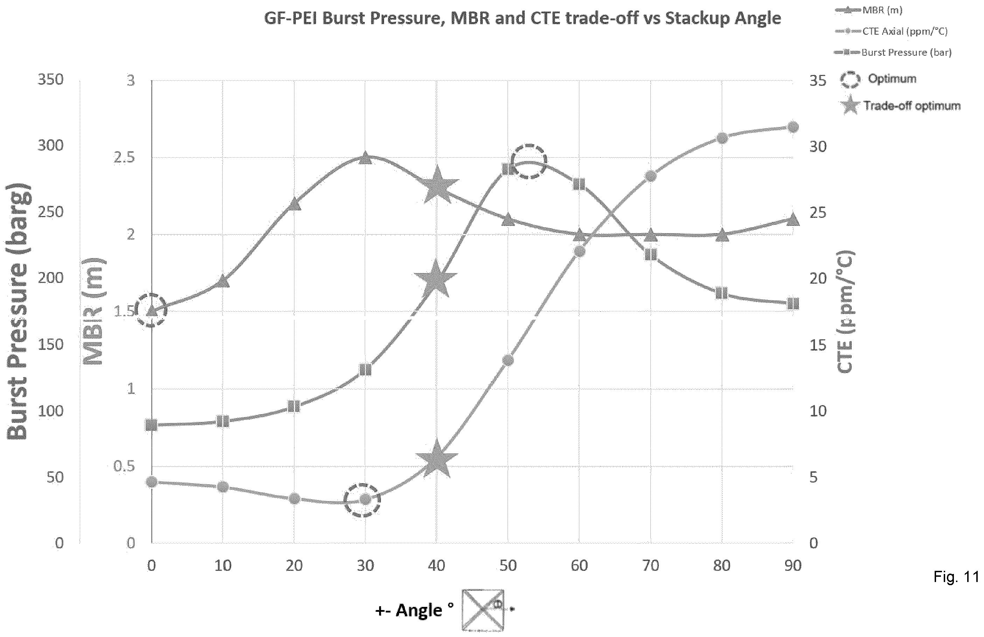

The cryostat 10 whose performance characteristics are graphed in Figure 11 comprises a liner 12 of PEI with tapes 14 comprising PEI reinforced with glass fibres, with the tapes 14 wound at angles of between 0 degrees and 90 degrees to the longitudinal axis. The polymer liner 12 is PEI. The liner 12 has a Young's Modulus at room temperature (RT) of 3.1GPa and at -196°C of 4.8 GPa. The strength and strains at yield is 52.7 MPa at 1.9%, the max stress is 98MPa at 5.98% at RT. The strength and strains at yield are 85 MPa at 2.1% and max stress is 155 MPa at 4% at -196°C. The CTE from 25°C to -196°C = 38 ppm/°C. The liner 12 dimensions are an inner diameter of 44.5mm and wall thickness 0.65mm.

The reinforcing fibre material is glass fibre, for example AGY S-2 Glass fibres having a Young's Modulus of 86 GPa, a strength of 4600 MPa and strain at break 5.4% at room temperature. The CTE from 25°C to -196°C = +1.6 ppm/°C. The reinforced tape 14 has a fibre volume fraction of 55-59% and is 0.25mm thick. The tapes 14 are wound with a total of 10 layers.

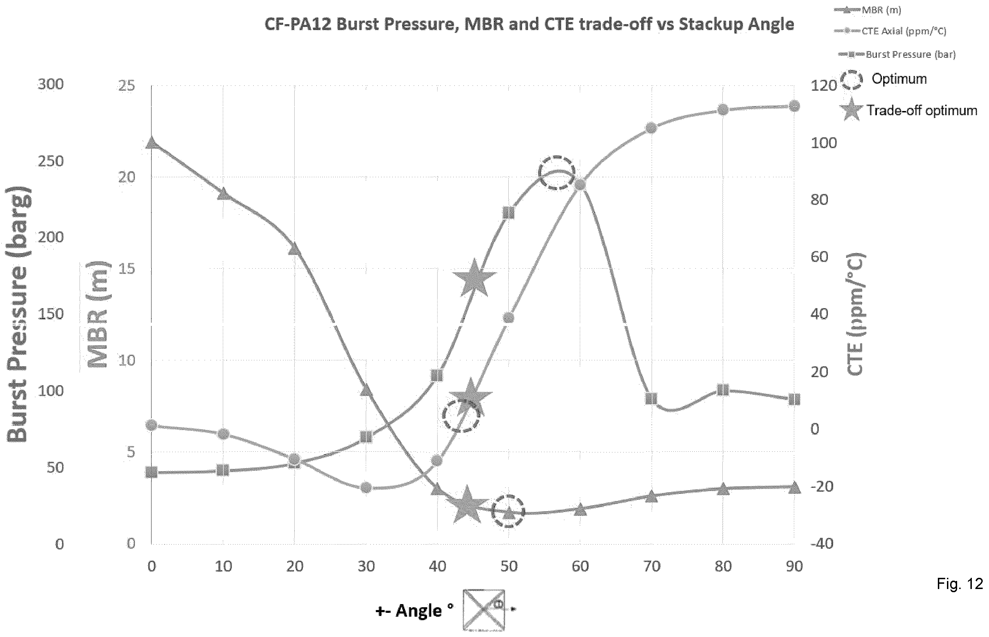

The cryostat 10 whose performance characteristics are graphed in Figure 12 comprises a liner 12 of PA12 with tapes 14 comprising PA12 reinforced with carbon fibres, with the tapes 14 wound at angles of between 0 degrees and 90 degrees to the longitudinal axis. The polymer liner 12 is PA12. The liner 12 has a Young's Modulus at room temperature (RT) of 1.3GPa and at -196°C of 5.2 GPa. The strength and strains at yield is 17 MPa at 1.54%, the max stress is 40MPa at 160% at RT. The strength and strains at yield are 78 MPa at 1.69% and max stress is 191 MPa at 11% at -196°C. The CTE from 25°C to -196°C = 70 ppm/°C. The liner 12 dimensions are an inner diameter of 46mm and wall thickness 2mm.

The reinforcing fibre material is high strength and high strain carbon fibre, for example Hexcel AS4A carbon fibres having a Young's Modulus of 231 GPa, a strength of 4431 MPa and strain at break 1.7% at room temperature. The CTE from 25°C to -196°C = -1 ppm/°C. The reinforced tape 14 has a fibre volume fraction of 55-59% and is 0.265mm thick. The tapes 14 are wound with a total of 12 layers.

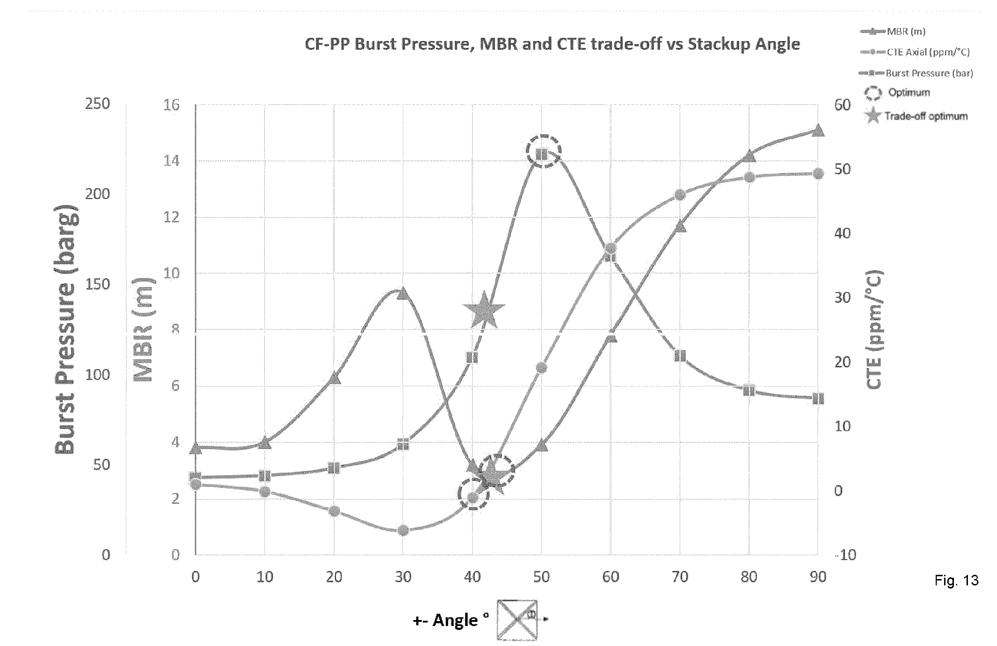

The cryostat 10 whose performance characteristics are graphed in Figure 13 comprises a liner 12 of PP with tapes 14 comprising PP reinforced with carbon fibres, with the tapes 14 wound at angles of between 0 degrees and 90 degrees to the longitudinal axis. The polymer liner 12 is PA12. The liner 12 has a Young's Modulus at room temperature (RT) of 1.4GPa and at -196°C of 6.3 GPa. The strength and strains at yield is 13 MPa at 1.02%, the max stress is 25MPa at 7.57% at RT. The strength and strains at yield are 15 MPa at 0.95% and max stress is 72 MPa at 1.25% at -196°C. The CTE from 25°C to -196°C = 56.5 ppm/°C. The liner 12 dimensions are an inner diameter of 45mm and wall thickness 2mm.

The reinforcing fibre material is high strength and high strain carbon fibre, for example Hexcel AS4A carbon fibres having a Young's Modulus of 231 GPa , a strength of 4431 MPa and strain at break 1.7% at room temperature. The CTE from 25°C to -196°C = -1 ppm/°C. The reinforced tape 14 has a fibre volume fraction of 55-59% and is 0.16mm thick. The tapes 14 are wound with a total of 18 layers.

It will therefore be seen from the above examples that there are many factors that will impact the overall axial CTE of the cryostat 10, and these will vary depending on the combination, characteristics and/or dimensions of the materials utilised. By selectively designing the cryostat 10 a very low or near zero axial CTE can be achieved which then avoids the requirement to use bellows or other expansion joints over long distances. This is particularly beneficial in bulk cryogen transport and superconducting cable applications, embodiments of which are detailed hereinafter.

Figure 2 illustrates a first embodiment of a superconducting cable system according to an aspect of the invention, generally indicated as 20, which comprises a superconductor 22 of suitable material, and may comprise a single component or multiple components, for example an array or arrangement of superconducting ribbons or the like. The cable system 20 further comprises the reinforced thermoplastic cryostat 10 hereinbefore described, through a central lumen of which the superconductor 22 extends longitudinally and which, in use, is at least partially filled with a cryogenic fluid (cryogen) 24, for example liquid hydrogen, nitrogen, helium, although it is envisaged that any other liquid, gaseous or multiphase cryogens or combinations of cryogens may be utilised. In this way the superconductor 22 is in thermal communication with the cryogen 24 in order to maintain the requisite cryogenic temperature required for superconductivity.

Although in the embodiment illustrated the superconductor 22 is in direct contact with the cryogen 24 in order to establish thermal communication, it is also possible, as illustrated in later embodiments, that indirect contact between the superconductor and cryogen may still provide the necessary thermal communication. The operating temperature of the cryogen 24 may vary depending on the operating requirements and/or conditions of the cable system 20 or additional or alternative parameters, and for example where liquid nitrogen is used as the cryogen 24 the operating temperature may be in the range of 67°K to 77°K at an operating pressure of between 0 bar and 25 bar. It should however be understood that these are exemplary parameters and lower or higher temperatures and/or pressures may be employed. It should also be understood that the superconductor 22 could be arranged for example eccentrically or extend helically or the like, while still extending longitudinally relative to the overall length of the cable system 20.

The cable system 20 additionally comprises a layer of thermal insulation 26 surrounding the cryostat 10, and an outer cryostat 28 surrounding and enclosing the foregoing components. A vacuum annulus 30 is defined between the inner cryostat 10 and the outer cryostat 28 to provide additional thermal insulation. The vacuum drawn in the vacuum annulus 30 reduces thermal convection in the cable system 20, and in the embodiment illustrated may be in the range of between 1 and 1000 Pa, although alternative vacuum levels may be employed, for example a hard or soft vacuum. A centralising element 32 may optionally be provided in the vacuum annulus 30 in order to physically maintain the correct position of the inner cryostat 10 concentrically or otherwise with the outer cryostat 28, preferably to ensure a uniform vacuum annulus 30. The outer cryostat 28 provides environmental protection to the cable system 20, reduces thermal losses, avoids permeation of contaminants such as particulate matter and provides structural containment against the surrounding environment, which may for example be a body of water exerting significant pressure on the outer cryostat 28. The outer cryostat 28 is preferably a multilayer construction comprising a smooth bore steel pipe or corrugated steel jacket for environmental protection. Alternatively the outer cryostat 28 may comprise a polymer pipe with one or more optional electrical insulation layers (not shown) and/or a permeation barrier layer that may for example be metallic. The centralising element 32 may be of any suitable shape, configuration and material, and in the embodiment illustrated is helical in shape in order to extend around the circumference of the annulus 30. Finally, the cable system 20 may be provided with external ballast 34, for example where the cable system 20 is to be deployed underwater such as in subsea applications to ensure the cable system 20 sinks to the seabed.

The use of the novel reinforced thermoplastic cryostat 10 provides the necessary performance characteristics, in particular an axial CTE at or near zero to avoid or minimise thermal expansion/contraction issues during use. This avoids or significantly reduces the need for thermal expansion management systems like bellows-based expansion joints. Therefore, the IC reliability and performance are enhanced whilst retaining a smooth-bore pipe shape. This allows pressure losses to be minimised compared to a corrugated cryostat and thus allows for longer superconductor cable systems. The liner 12 can be manufactured through extrusion or the like, a continuous and inexpensive manufacturing process for thermoplastic materials. In addition, the layers of reinforced tape 14 may be subsequently added to the liner 12 through a continuous additive manufacturing method (Automatic Tape Winding, Automatic Fibre Placement or similar) and in-situ consolidated with heat and force applied to the liner 12 and tapes 14 to form a fully bonded cryostat 10. The reinforcement tapes 14 can be deposited at the necessary helix angle(s) during this continuous process. The technical performance of the fully bonded cryostat 10 can be varied as required depending on a number of factors such as the material of the liner 12, the material of the tapes 14 (both substrate and fibres), their respective dimensions, and the deposition angle of each of the reinforcement tapes 14 and their arrangement (layup).

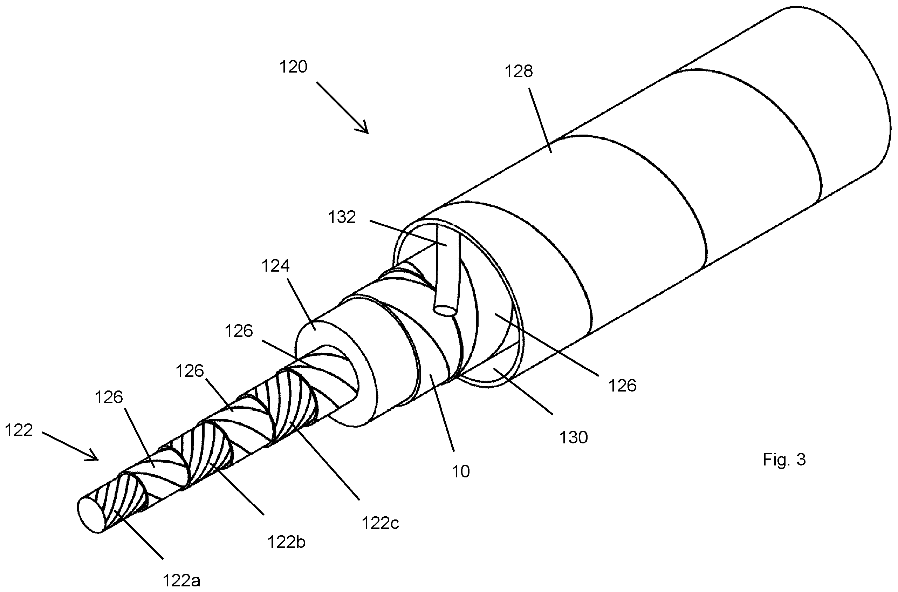

Referring now to Figure 3 a second embodiment of a superconducting cable system according to the present invention is illustrated and generally indicated as 120. In this second embodiment like components have been accorded like reference numerals and unless otherwise stated perform a like function.

The cable system 120 comprises a superconductor 122 comprised of an inner superconducting element 122a, a first coaxial superconducting element 122b surrounding the inner element 122a and separated therefrom by a layer insulation 126, and a second coaxial superconducting element 122c surrounding the first coaxial superconducting element 122b and separated therefrom by a layer of insulation 126. This arrangement is selected to conduct three phase AC current. It will of course be understood that a single pole or bi-axial bi-pole DC conductor (not shown) could be used as an alternative. The superconductor 122 is located coaxially within the lumen of the reinforced thermoplastic cryostat 10 hereinbefore described, containing a cryogen 124 in which the superconductor 122 is therefore encapsulated such as to establish thermal communication therebetween. A layer of thermal insulation 126 surrounds the inner cryostat 10, and may be of any suitable form, for example comprising one or more of aerogel, nanoporous insulation, layered composite insulation, multilayer insulation or insulation blanket.

An outer cryostat 128 surrounds the insulated inner cryostat 10, with a vacuum annulus 130 defined between the inner cryostat 10 and the outer cryostat 128 to provide additional thermal insulation. An optional centralising element 132 may be provided in the vacuum annulus 130 in order to physically maintain the corrected position of the inner cryostat 10 concentrically or otherwise with the outer cryostat 128 such as to ensure a uniform vacuum annulus region.

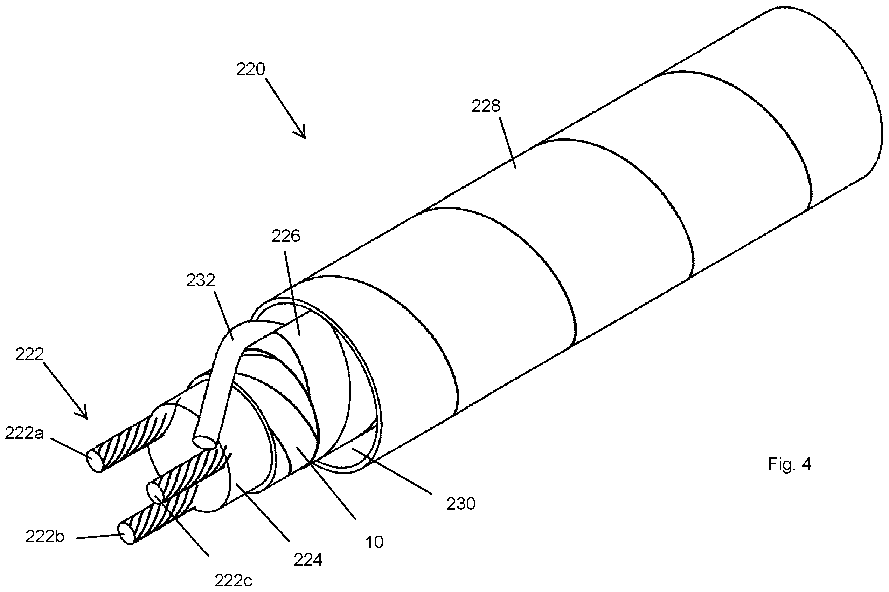

Figure 4 illustrates a third embodiment of a superconducting cable system according to the present invention, generally indicated as 220. In this third embodiment like components have been accorded like reference numerals and unless otherwise stated perform a like function.

The cable system 220 comprises a superconductor 222 in a three core tri-axis configuration comprising a first superconducting element 222a, a second superconducting element 222b and a third coaxial superconducting element 222c arranged in a circular array to facilitate three phase AC. The superconductor 222 is located longitudinally within the lumen of the reinforced thermoplastic cryostat 10, containing a cryogen 224 surrounding the superconductor 222 to establish thermal communication therebetween. A layer of thermal insulation 226 surrounds the cryostat 10, and may be of any suitable form as hereinbefore described. An outer cryostat 228 surrounds the insulated inner cryostat 10, with a vacuum annulus 230 defined therebetween, and an optional centralising element 232 may be provided in the vacuum annulus 230.

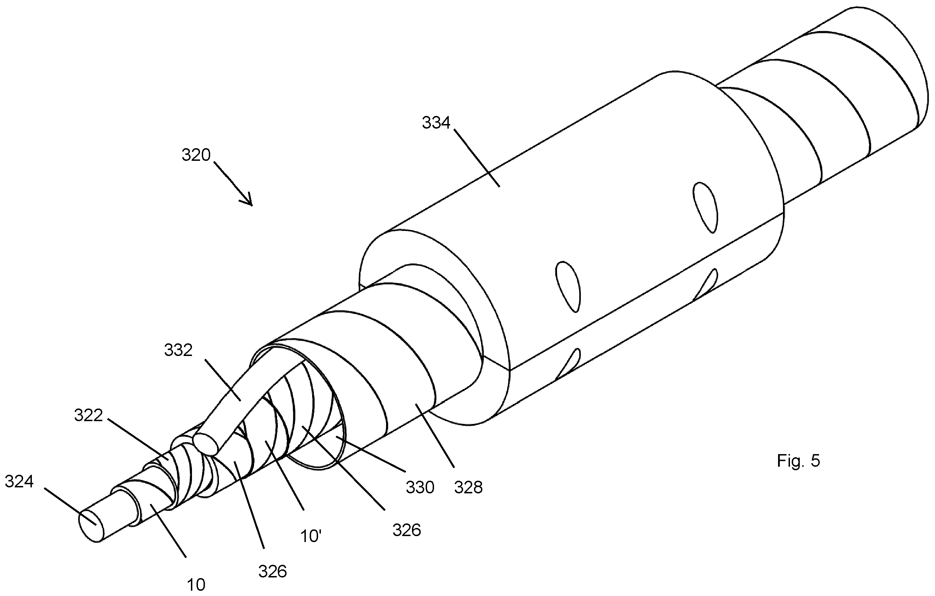

Figure 5 illustrates a fourth embodiment of a superconducting cable system according to the present invention, generally indicated as 320. In this fourth embodiment like components have been accorded like reference numerals and unless otherwise stated perform a like function.

The cable system 320 comprises a superconductor 322 of tubular form and located longitudinally about an exterior surface of a first instance of the reinforced thermoplastic cryostat 10 in thermal communication therewith. The cryostat 10 contains a cryogen 324 with which the superconductor 322 is in thermal communication via the cryostat 10 which provides structural integrity containing the pressurised cryogen 324 and acting as a permeability barrier.

The cable system 320 additionally comprises a second instance of the cryostat 10' surrounding the first or inner cryostat 10 and again comprising a laminate of a liner and reinforcing tapes. However the second cryostat 10' may be thinner in radial thickness or levels of tape reinforcement, for example if the second cryostat 10 is not subject to internal pressurisation, which may occur purely in the cryostat 10. The second cryostat 10' may therefore have a design and dimensions appropriate to the lower structural and mechanical requirements, and may not provide sufficient dielectric strength in isolation, and may simply provide light mechanical protection for the superconductor 322.

Accordingly, an additional electrical and/or mechanical layer may be provided between the superconductor 322 and the second cryostat 10'.

A layer of thermal insulation 326 outwardly surrounds the second cryostat 10', and may be of any suitable form as hereinbefore described. An outer cryostat 328 surrounds the two cryostats 10, 10' with a vacuum annulus 330 defined therebetween, and an optional centralising element 332 may be provided in the vacuum annulus 330. Optional ballast 334 may be provided, preferably about an exterior of the outer cryostat 328.

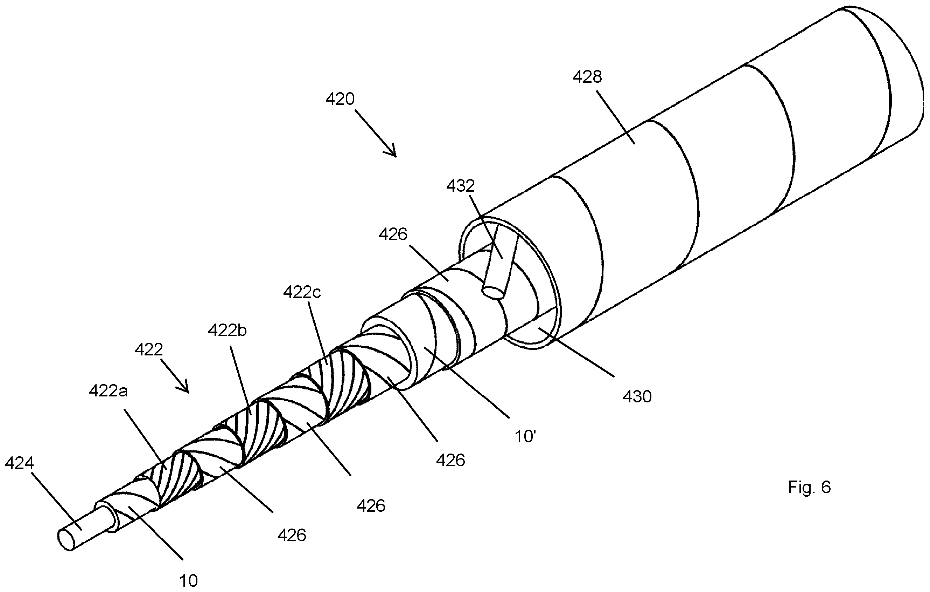

Figure 6 illustrates a fifth embodiment of a superconducting cable system according to the present invention, generally indicated as 420. In this fifth embodiment like components have been accorded like reference numerals and unless otherwise stated perform a like function.

The cable system 420 is similar to the cable system 320 shown in Figure 6, but with a three phase co-axial superconductor 422 of tubular form and located longitudinally about an exterior surface of the reinforced thermoplastic cryostat 10 in thermal communication therewith. The superconductor 422 is comprised of an inner tubular superconducting element 422a, a first tubular and coaxial superconducting element 422b surrounding the inner element 422a and separated therefrom by a layer of insulation 426, and a second tubular coaxial superconducting element 422c surrounding the first coaxial superconducting element 422b and separated therefrom by a further layer of insulation 426. This arrangement is selected to conduct three phase AC current.

The cryostat 10 contains a cryogen 424 with which the superconductor 422 is in thermal communication via the cryostat 10. The cable system 420 additionally comprises a second cryostat 10' surrounding the first cryostat 10. A layer of thermal insulation 426 surrounds the second cryostat 10, and may be of any suitable form. An outer cryostat 428 surrounds the insulated cryostats 10, 10' with a vacuum annulus 430 defined therebetween, and an optional centralising element 432 may be provided in the vacuum annulus 430.

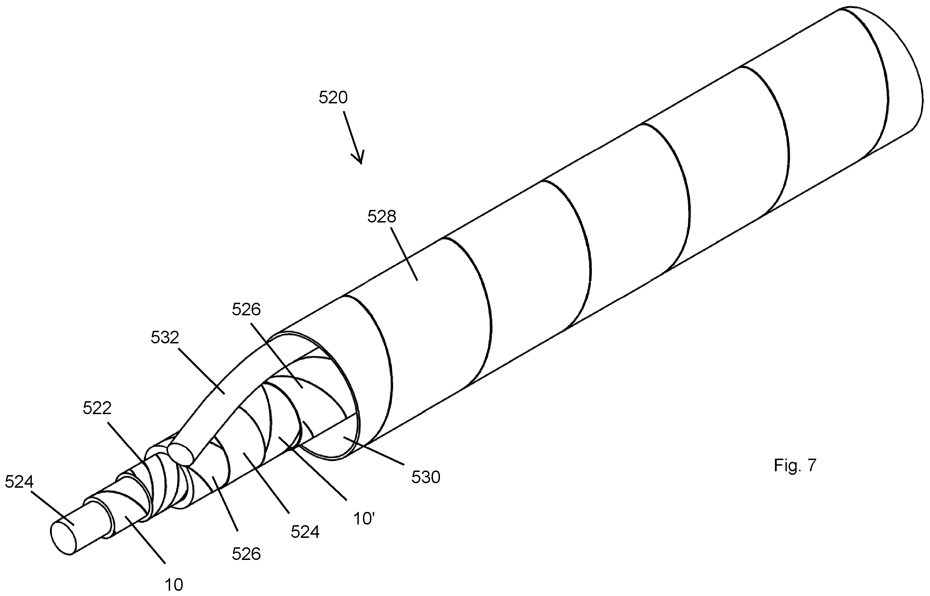

Figure 7 illustrates a sixth embodiment of a superconducting cable system according to the present invention, generally indicated as 520. In this sixth embodiment like components have been accorded like reference numerals and unless otherwise stated perform a like function.

The cable system 520 comprises a single phase superconductor 522 and located longitudinally about an exterior surface of the reinforced thermoplastic cryostat 10 in thermal communication therewith. The cryostat 10 contains a cryogen 524 with which the superconductor 522 is in thermal communication via the cryostat 10.

The cable system 520 additionally comprises a second cryostat 10' surrounding the first cryostat 10. The second cryostat 10' defines a secondary lumen containing a second supply of the cryogen 524 to provide improved thermal performance. This second supply may comprise a different cryogen 524 to that contained within the cryostat 10. An electrical and/or mechanical layer 526 may be provided between the superconductor 522 and the second cryostat 10'.

A layer of thermal insulation 526 surrounds the second cryostat 10', while an outer cryostat 528 surrounds the insulated inner cryostats 10 and 10', with a vacuum annulus 530 defined therebetween and incorporating an optional centralising element 532.

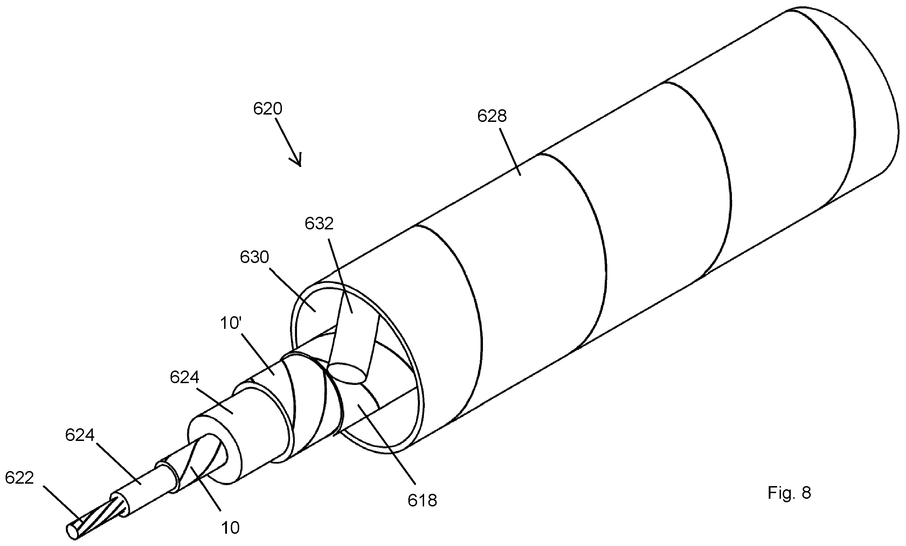

Figure 8 illustrates a seventh embodiment of a superconducting cable system according to the present invention, generally indicated as 620. In this seventh embodiment like components have been accorded like reference numerals and unless otherwise stated perform a like function.

The cable system 620 comprises a single phase superconductor 622 of suitable form and extending longitudinally and preferably coaxially within the lumen of the reinforced thermoplastic cryostat 10 filled with a cryogen 624. In this way the superconductor 622 is in direct and thermal communication with the cryogen 624 in order to maintain the requisite cryogenic temperature required for superconductivity. The single phase superconductor 622 may of course be replaced with a multiphase superconductor as hereinbefore described.

The cable system 620 additionally comprises a second cryostat 10' surrounding the first cryostat 10. The second cryostat 10' defines a secondary lumen containing a second supply of the cryogen 624 to provide improved thermal performance, which may be the same as or different to the cryogen 624 contained within the first cryostat 10 and which may be maintained at a different temperature. A layer of thermal insulation 626 surrounds the second cryostat 10', while an outer cryostat 628 surrounds the insulated inner cryostats 10 and 10', with a vacuum annulus 630 defined therebetween incorporating an optional centralising element 632.

The invention is not limited to the embodiments described herein but can be amended or modified without departing from the scope of the present invention as claimed.

## Claims

1. A reinforced thermoplastic cryostat (10) for a high temperature superconductor (22) comprising a thermoplastic conduit (12) and a plurality of reinforced thermoplastic tapes (14) wound around an exterior surface of the thermoplastic conduit in a helical orientation to the axial direction and bonded to the exterior surface of the thermoplastic conduit, the combined thermoplastic tapes and cryostat having an axial coefficient of thermal expansion of between +/- 15e-6/°C.

2. A reinforced thermoplastic cryostat (10) according to claim 1 in which the thermoplastic tapes (14) extend at a helix angle of between 20° and 50°, more preferably less than 45° , and most preferably between 25° and 40° to the axial direction.

3. A reinforced thermoplastic cryostat (10) according to claim 1 or 2 in which two or more of the thermoplastic tapes (14) extend at different helix angles.

4. A reinforced thermoplastic cryostat (10) according to any of claims 1 to 3 in which two or more of the thermoplastic tapes (14) extend in opposition directions around the exterior surface of the thermoplastic conduit.

5. A reinforced thermoplastic cryostat (10) according to any preceding claim in which the thermoplastic tapes (14) are arranged in layers.

6. A reinforced thermoplastic cryostat (10) according to claim 5 in which the thermoplastic tapes (14) of adjacent layers extend in opposition directions around the exterior surface of the thermoplastic conduit (12).

7. A reinforced thermoplastic cryostat (10) according to any preceding claim in which the thermoplastic tapes (14) comprise reinforcing fibres.

8. A reinforced thermoplastic cryostat (10) according to claim 5 in which the reinforcing fibres comprise a negative coefficient of thermal expansion.

9. A reinforced thermoplastic cryostat (10) according to claim 5 or 6 in which the thermoplastic tapes (14) comprise a substrate on which the reinforcing fibres are retained.

10. A reinforced thermoplastic cryostat (10) according to any preceding claim in which the thermoplastic conduit (12) comprises a polymer selected from PEEK, PA, PEI, TPI, HDPE, PP, PVDF, PPS and/or ABS.

11. A reinforced thermoplastic cryostat (10) according to any preceding claim in which the thermoplastic tape comprises a polymer selected from PEEK, PA, PEI, TPI, HDPE, PP, PVDF, PPS and/or ABS.

12. A reinforced thermoplastic cryostat (10) according to any preceding claim in which the thermoplastic conduit and the thermoplastic tapes comprise the same material.

13. A superconductor cable system (20; 120; 220; 320; 420; 620) comprising a reinforced thermoplastic cryostat (10) according to any preceding claim; a superconductor (22; 122; 222; 322; 422; 522; 622) extending longitudinally of the cryostat; and a supply of cryogen (24; 124; 224; 324; 424; 524; 624) contained within the cryostat in thermal communication with the superconductor.

14. A method of manufacturing a reinforced thermoplastic cryostat (10) for a superconductor cable system comprising the steps of extruding a thermoplastic conduit (12) and winding a plurality of reinforced thermoplastic tapes (14) around an exterior surface of the thermoplastic conduit in a helical orientation to the axial direction; and bonding the thermoplastic tapes to the thermoplastic conduit such as to provide the cryostat with an axial coefficient of thermal expansion of between +/- 15e-6/°C.

15. A method according to claim 14 comprising winding the thermoplastic tapes at a helix angle of between 20° and 50°, more preferably less than 45° , and most preferably between 25° and 40° to the axial direction.

## Patentansprüche

1. Verstärkter thermoplastischer Kryostat (10) für einen Hochtemperatursupraleiter (22), umfassend eine thermoplastische Leitung (12) und eine Vielzahl von verstärkten thermoplastischen Bändern (14), die in schraubenförmiger Ausrichtung zu der axialen Richtung um eine Außenfläche der thermoplastischen Leitung gewickelt und mit der Außenfläche der thermoplastischen Leitung verbunden sind, wobei die kombinierten thermoplastischen Bänder und der Kryostat einen axialen Wärmeausdehnungskoeffizienten von zwischen +/- 15e-6/°C aufweisen.

2. Verstärkter thermoplastischer Kryostat (10) nach Anspruch 1, wobei sich die thermoplastischen Bänder (14) in einem Steigungswinkel zwischen 20° und 50°, mehr bevorzugt weniger als 45° und am meisten bevorzugt zwischen 25° und 40° zu der axialen Richtung erstrecken.

3. Verstärkter thermoplastischer Kryostat (10) nach Anspruch 1 oder 2, wobei sich zwei oder mehr der thermoplastischen Bänder (14) in unterschiedlichen Steigungswinkeln erstrecken.

4. Verstärkter thermoplastischer Kryostat (10) nach einem der Ansprüche 1 bis 3, wobei sich zwei oder mehr der thermoplastischen Bänder (14) in entgegengesetzte Richtungen um die Außenfläche der thermoplastischen Leitung erstrecken.

5. Verstärkter thermoplastischer Kryostat (10) nach einem der vorhergehenden Ansprüche, wobei die thermoplastischen Bänder (14) in Schichten angeordnet sind.

6. Verstärkter thermoplastischer Kryostat (10) nach Anspruch 5, wobei sich die thermoplastischen Bänder (14) benachbarter Schichten in entgegengesetzte Richtungen um die Außenfläche der thermoplastischen Leitung (12) erstrecken.

7. Verstärkter thermoplastischer Kryostat (10) nach einem der vorhergehenden Ansprüche, wobei die thermoplastischen Bänder (14) Verstärkungsfasern umfassen.

8. Verstärkter thermoplastischer Kryostat (10) nach Anspruch 5, wobei die Verstärkungsfasern einen negativen Wärmeausdehnungskoeffizienten umfassen.

9. Verstärkter thermoplastischer Kryostat (10) nach Anspruch 5 oder 6, wobei die thermoplastischen Bänder (14) ein Substrat umfassen, auf dem die Verstärkungsfasern gehalten werden.

10. Verstärkter thermoplastischer Kryostat (10) nach einem der vorhergehenden Ansprüche, wobei die thermoplastische Leitung (12) ein Polymer umfasst, ausgewählt aus PEEK, PA, PEI, TPI, HDPE, PP, PVDF, PPS und/oder ABS.

11. Verstärkter thermoplastischer Kryostat (10) nach einem der vorhergehenden Ansprüche, wobei das thermoplastische Band ein Polymer umfasst, ausgewählt aus PEEK, PA, PEI, TPI, HDPE, PP, PVDF, PPS und/oder ABS.

12. Verstärkter thermoplastischer Kryostat (10) nach einem der vorhergehenden Ansprüche, wobei die thermoplastische Leitung und die thermoplastischen Bänder dasselbe Material umfassen.

13. Supraleiterkabelsystem (20; 120; 220; 320; 420; 620), umfassend einen verstärkten thermoplastischen Kryostaten (10) nach einem der vorhergehenden Ansprüche; einen Supraleiter (22; 122; 222; 322; 422; 522; 622), der sich in Längsrichtung des Kryostaten erstreckt; und einen Vorrat an Kryogen (24; 124; 224; 324; 424; 524; 624), der innerhalb des Kryostaten in thermischer Verbindung mit dem Supraleiter enthalten ist.

14. Verfahren zum Herstellen eines verstärkten thermoplastischen Kryostaten (10) für ein Supraleiterkabelsystem, umfassend die Schritte von Extrudieren einer thermoplastischen Leitung (12) und Wickeln einer Vielzahl von verstärkten thermoplastischen Bändern (14) in schraubenförmiger Ausrichtung zu der axialen Richtung um eine Außenfläche der thermoplastischen Leitung; und Verbinden der thermoplastischen Bänder mit der thermoplastischen Leitung derart, dass der Kryostat mit einem axialen Wärmeausdehnungskoeffizienten von zwischen +/- 15e-6/°C bereitgestellt wird.

15. Verfahren nach Anspruch 14, umfassend Wickeln der thermoplastischen Bänder in einem Steigungswinkel zwischen 20° und 50°, mehr bevorzugt weniger als 45° und am meisten bevorzugt zwischen 25° und 40° zu der axialen Richtung.

## Revendications

1. Cryostat thermoplastique renforcé (10) pour un supraconducteur à haute température (22) comprenant un conduit thermoplastique (12) et une pluralité de bandes thermoplastiques renforcées (14) enroulées autour d'une surface extérieure du conduit thermoplastique selon une orientation hélicoïdale par rapport à la direction axiale et liées à la surface extérieure du conduit thermoplastique, les bandes thermoplastiques et le cryostat combinés ayant un coefficient axial de dilatation thermique compris entre +/- 15e-6/°C.

2. Cryostat thermoplastique renforcé (10) selon la revendication 1, dans lequel les bandes thermoplastiques (14) s'étendent selon un angle d'hélice compris entre 20° et 50°, de préférence inférieur à 45°, et de manière préférée entre toutes entre 25° et 40° par rapport à la direction axiale.

3. Cryostat thermoplastique renforcé (10) selon la revendication 1 ou 2, dans lequel deux des bandes thermoplastiques (14) ou plus s'étendent selon des angles d'hélice différents.

4. Cryostat thermoplastique renforcé (10) selon l'une quelconque des revendications 1 à 3, dans lequel deux des bandes thermoplastiques (14) ou plus s'étendent dans des directions opposées autour de la surface extérieure du conduit thermoplastique.

5. Cryostat thermoplastique renforcé (10) selon une quelconque revendication précédente, dans lequel les bandes thermoplastiques (14) sont agencées en couches.

6. Cryostat thermoplastique renforcé (10) selon la revendications 5, dans lequel les bandes thermoplastiques (14) de couches adjacentes s'étendent dans des directions opposées autour de la surface extérieure du conduit thermoplastique (12).

7. Cryostat thermoplastique renforcé (10) selon une quelconque revendication précédente, dans lequel les bandes thermoplastiques (14) comprennent des fibres de renforcement.

8. Cryostat thermoplastique renforcé (10) selon la revendication 5, dans lequel les fibres de renforcement comprennent un coefficient de dilatation thermique négatif.

9. Cryostat thermoplastique renforcé (10) selon la revendication 5 ou 6, dans lequel les bandes thermoplastiques (14) comprennent un substrat sur lequel sont retenues les fibres de renforcement.

10. Cryostat thermoplastique renforcé (10) selon une quelconque revendication précédente, dans lequel le conduit thermoplastique (12) comprend un polymère choisi parmi PEEK, PA, PEI, TPI, HDPE, PP, PVDF, PPS et/ou ABS.

11. Cryostat thermoplastique renforcé (10) selon une quelconque revendication précédente, dans lequel la bande thermoplastique comprend un polymère choisi parmi PEEK, PA, PEI, TPI, HDPE, PP, PVDF, PPS et/ou ABS.

12. Cryostat thermoplastique renforcé (10) selon une quelconque revendication précédente, dans lequel le conduit thermoplastique et les bandes thermoplastiques comprennent le même matériau.

13. Système de câble supraconducteur (20 ; 120 ; 220 ; 320 ; 420 ; 620) comprenant un cryostat thermoplastique renforcé (10) selon une quelconque revendication précédente ; un supraconducteur (22 ; 122 ; 222 ; 322 ; 422 ; 522 ; 622) s'étendant longitudinalement par rapport au cryostat ; et une alimentation en cryogène (24 ; 124 ; 224 ; 324 ; 424 ; 524 ; 624) contenue au sein du cryostat en communication thermique avec le supraconducteur.

14. Procédé de fabrication d'un cryostat thermoplastique renforcé (10) pour un système de câble supraconducteur comprenant les étapes consistant à extruder un conduit thermoplastique (12) et à enrouler une pluralité de bandes thermoplastiques renforcées (14) autour d'une surface extérieure du conduit thermoplastique selon une orientation hélicoïdale par rapport à la direction axiale ; et à lier les bandes thermoplastiques au conduit thermoplastique de sorte à conférer au cryostat un coefficient axial de dilatation thermique compris entre +/- 15e-6/°C.

15. Procédé selon la revendication 14 comprenant l'enroulement des bandes thermoplastiques selon un angle d'hélice compris entre 20° et 50°, de préférence inférieur à 45°, et de manière préférée entre toutes entre 25° et 40° par rapport à la direction axiale.
